# EUROPEAN PATENT APPLICATION

(11) **EP 2 362 007 A1**
(43) Date of publication of application: **31.08.2011**
(21) Application number: 11154164.5
(22) Date of filing: 11.02.2011
(51) Int. Cl.: D06C 25/00, D06M 23/18, D06H 7/00, B26D 3/02, B26D 1/04, D06H 5/00, A41H 43/04, B29C 65/50, A41D 27/24, F24H 3/04, B29L 9/00, B29L 7/00

(54) **Machine for making fabric panels to be fluid tightly joined particularly for two-layer or three-layer laminated fabric materials**

(30) Priority: 25.02.2010 IT MI20100306
(71) Applicant: MACPI S.p.A. PRESSING DIVISION, 25036 Palazzolo Sull'Oglio (Brescia) (IT)
(72) Inventor: Cartabbia, Giovanni, 25036 Palazzolo Sull'Oglio (BS) (IT)
(74) Representative: Cicogna, Franco

(57) **Abstract**

A machine (1) for making fabric panels to be fluid tightly joined starting from two-layer or three-layer laminated fabric materials (T) comprises a bearing framework supporting a cauterizing assembly (2) for cauterizing a face of a fabric material (T) to be joined, and providing at least a cauterizing line, a cutting assembly (22) for performing, on an edge of the fabric material (T) to be joined, a slanted cut line and an adhesive strip applying assembly for applying an adhesive strip to at least the cauterization line and inclined cut line.

## Description

### BACKGROUND OF THE INVENTION

The present invention relates to a machine for making fabric panels to be fluid tightly joined particularly for two-layer or three-layer laminated fabric materials.

As is known, for making liquid impermeable protecting garments, laminated fabric materials, which may comprise two or more fabric material layers or plies, of which at least one is a barrier membrane layer, are at present used.

As the above fabric materials are used, it is necessary to perform the fabric joints with fluid tight connection portions at the joined regions.

In a prior Italian patent application No. MI2010A000169, which is herein included by reference, a method for making and fluid tightly joining fabric material portions, of a two-layer or three-layer type, has been already disclosed.

### SUMMARY OF THE INVENTION

The aim of the present invention is to provide a machine for joining in a fluid impermeable manner fabric panels made of two-layer or three-layer laminated fabric materials, which is very simple construction-wise, and provides a perfectly impermeable joined fabric pieces.

Within the scope of the above mentioned aim, a main object of the invention is to provide such a machine including a plurality of operating assemblies which may be selectively used or driven depending on different operating requirements.

Another object of the present invention is to provide such a machine which, owing to its specifically designed constructional features, is very reliable and safe in operation.

Yet another object of the present invention is to provide such a machine which can be easily made starting from easily available elements and materials.

According to one aspect of the present invention, the above mentioned aim and objects, as well as yet other objects, which will become more apparent hereinafter, are achieved by a machine for making fluid impermeable junctions in bi-layer or three-layer laminated fabric materials, characterized in that said machine comprises a bearing framework supporting a cauterization assembly for cauterizing a face of a fabric material to be joined and providing at least a cauterization line, a cutting assembly for performing, on an edge portion to be joined of said fabric material, an inclined cutting line and an assembly for applying an adhesive strip affecting at least said cauterization line and at least said inclined cutting line.

### BRIEF DESCRIPTION OF THE DRAWINGS

Further characteristics and advantages of the present invention will become more apparent from the following detailed disclosure of a preferred, though not exclusive, embodiment of a machine for making fabric panels to be fluid tightly joined particularly starting from two-layer or three-layer laminated fabric materials, which is illustrated, by way of an indicative, but not limitative, example in the accompanying drawings, where:

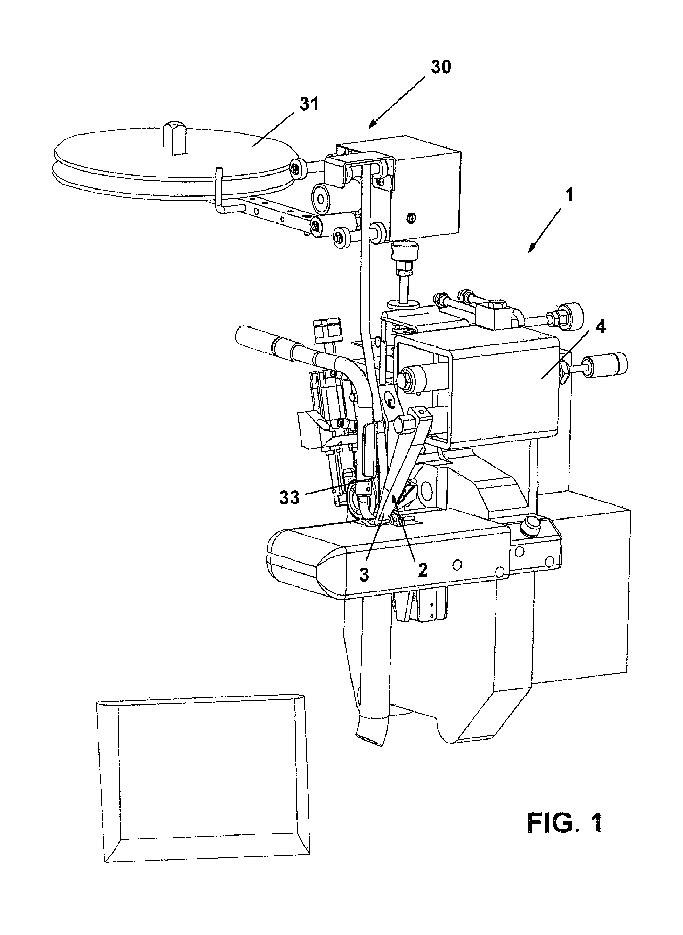

Figure 1 is a schematic perspective view showing the machine according to the present invention;

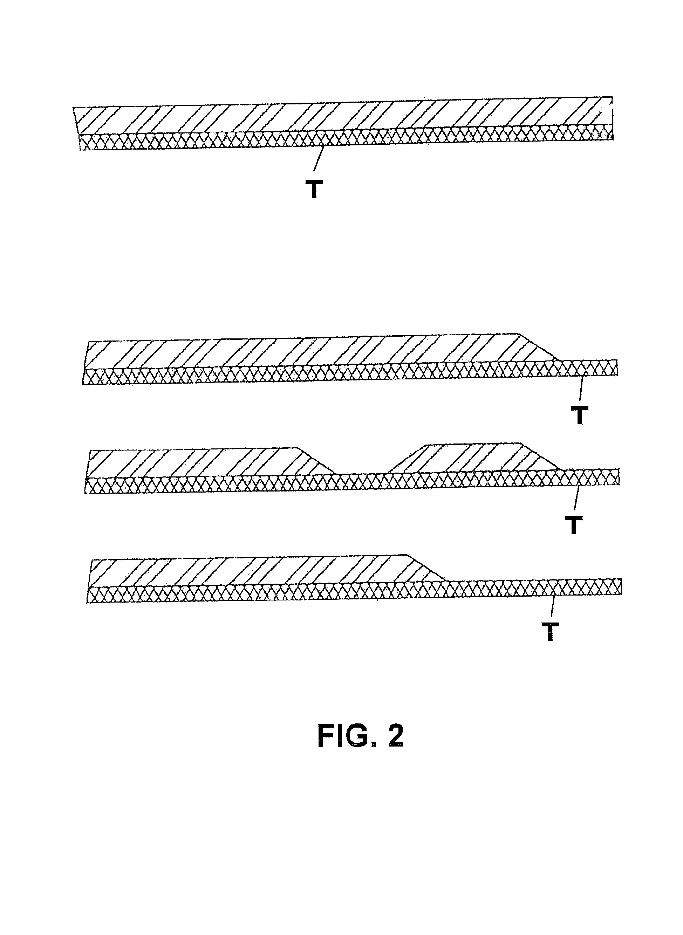

Figure 2 is a further schematic view showing a cauterization line on a two-layer or two-ply fabric material;

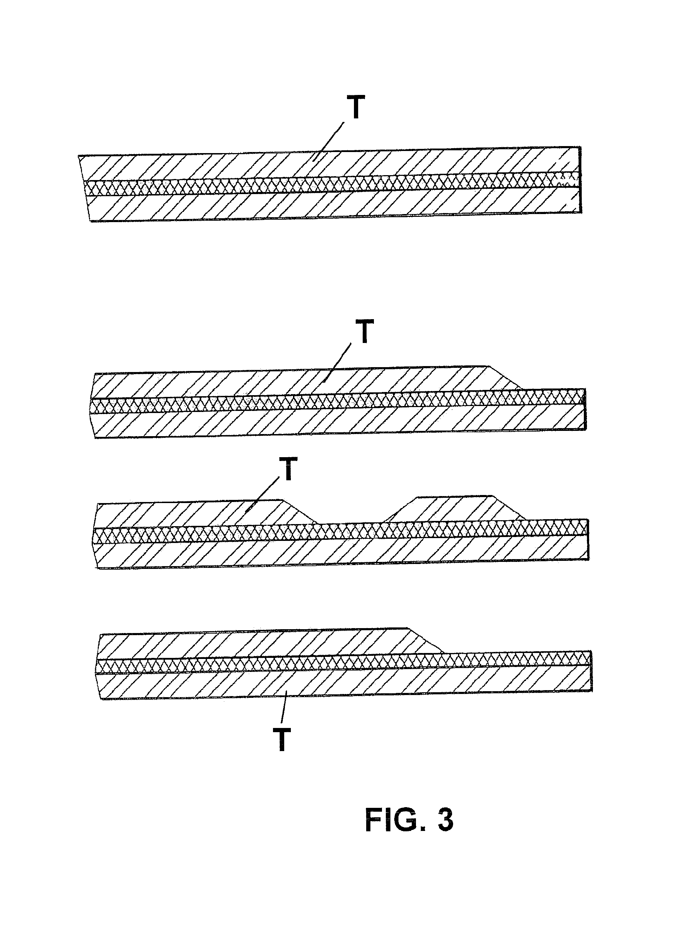

Figure 3 is a further schematic view showing a cauterization line on a three-layer or three-ply fabric material;
Figure 4 is a perspective view showing a cauterizing assembly with a distributed jet pattern;
Figure 5 shows a detail of the distributed jet pattern;
Figure 6 shows an air heating assembly for heating air to be fed to the distributed jet cauterizing assembly;
Figure 7 is a further perspective view showing the cauterizing assembly including separated air jets or flows;
Figure 8 is yet another perspective view showing a detail of the separated jets;
Figure 9 further shows a detail of the separated jet cauterizing assembly;
Figure 10 is a perspective view showing the fabric material guiding assembly;

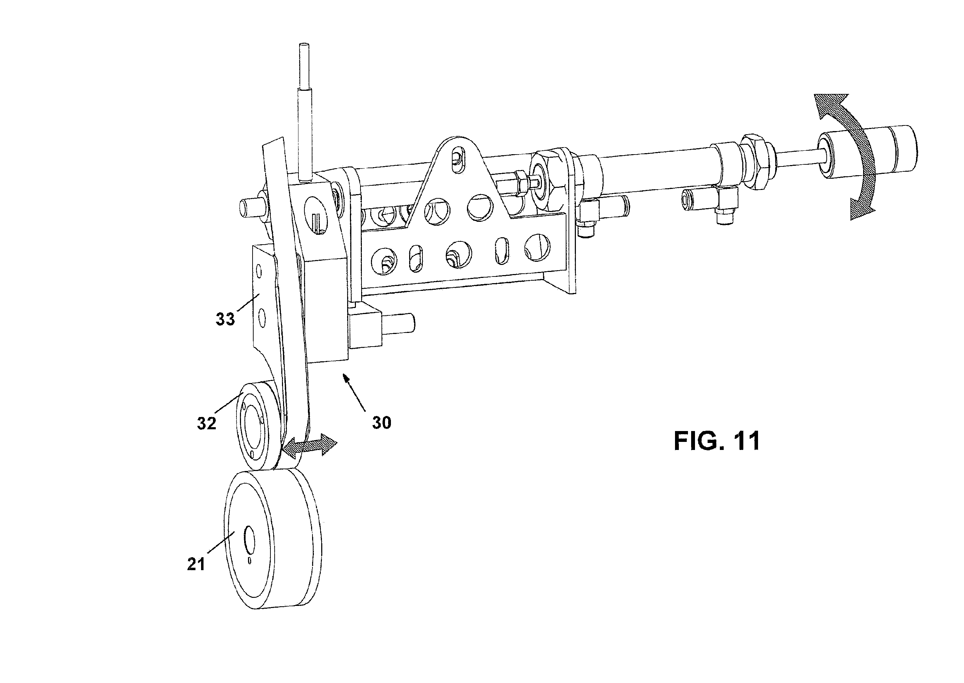

Figure 11 is a further perspective view showing an adhesive strip feeding assembly;

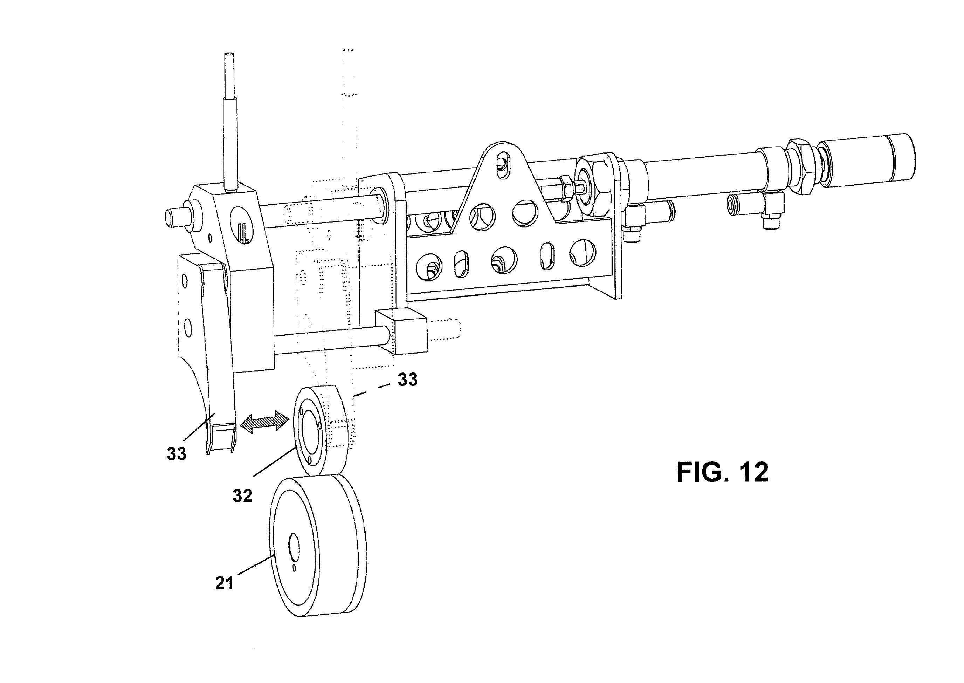

Figure 12 is a partially exploded perspective view showing the adhesive strip feeding or supplying assembly;

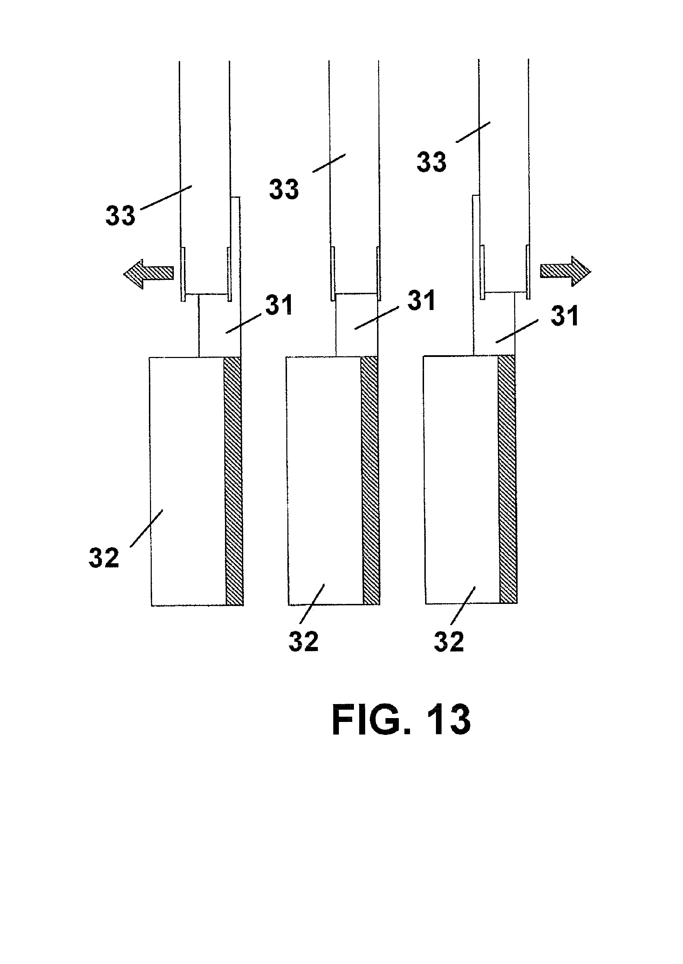

Figure 13 is a schematic view showing different operating positions of the adhesive strip with respect to a driving roller therefor;
Figure 14 is a schematic view showing the adhesive strip cutting assembly;
Figure 15 is a detail view showing the adhesive strip tensioning or pulling assembly;

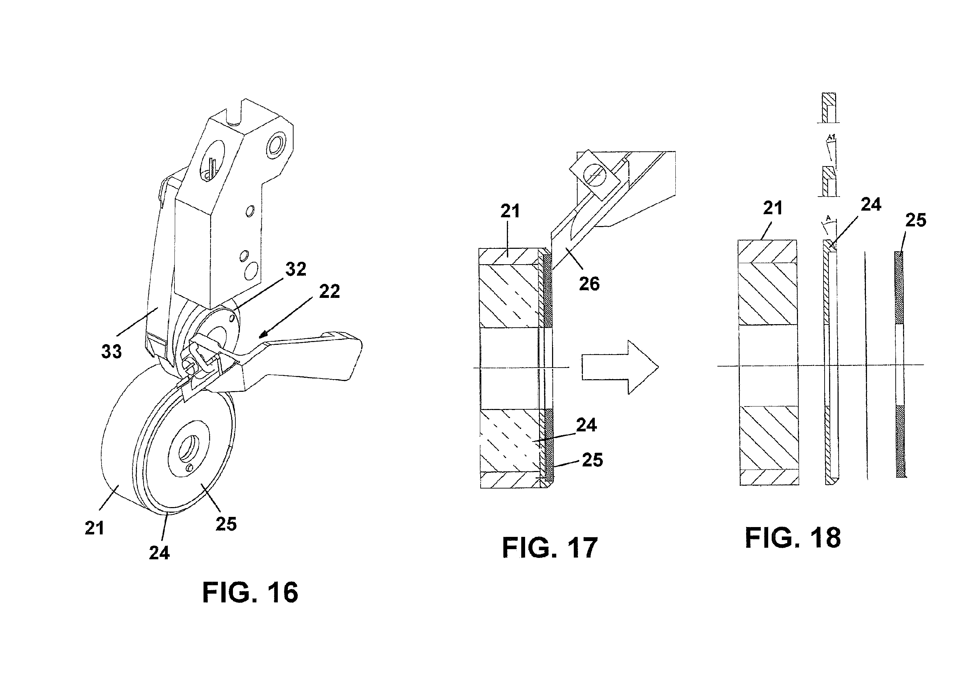

Figure 16 is yet another perspective view showing the inclined cutting assembly;
Figure 17 is yet another cross-sectional view showing the cutting assembly locating pattern;
Figure 18 is an exploded perspective view showing the cutting assembly with different elements thereof in an interexchanged position to change the angular positions of said cutting assembly;
Figure 19 is a schematic view showing the fabric material applied to the cutting assembly;
Figure 20 is a further schematic view showing the fabric material folding operating step;
Figure 21 shows the fabric material inclined cutting operating step;

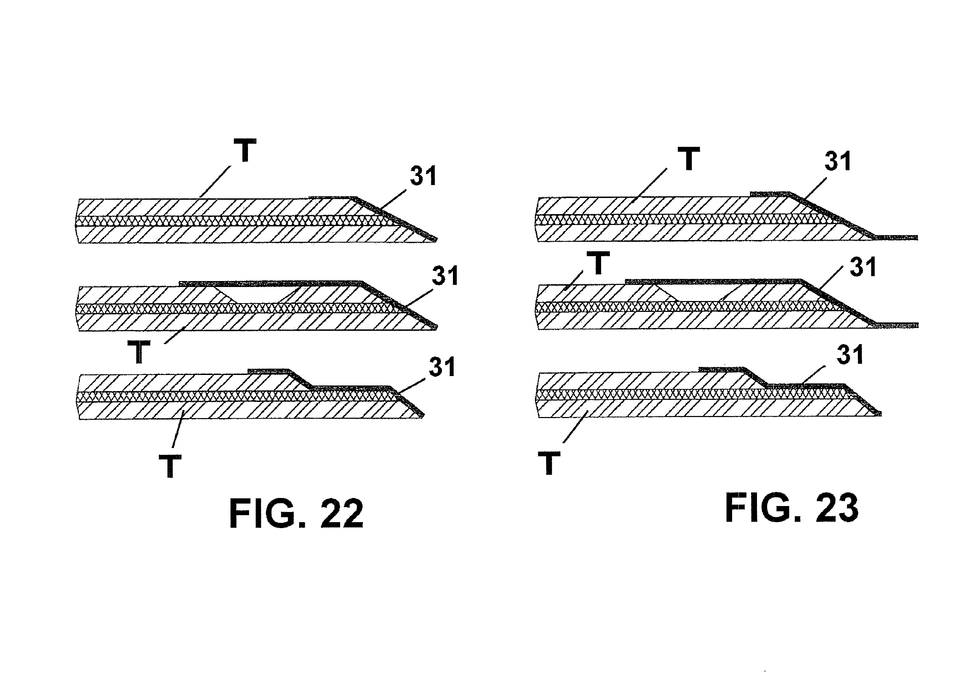

Figure 22 shows a fabric material to which has been flush applied an adhesive strip;
Figure 23 shows a fabric material to which an adhesive strip projecting from an inclined cut pattern has been applied.

### DESCRIPTION OF THE PREFERRED EMBODIMENTS

With reference to the number references of the above mentioned figures, the machine for making fabric panels to be fluid tightly joined starting from two-layer or three-layer laminated fabric materials, according to the present invention, which has been generally indicated by the reference number 1, comprises a cauterization or cauterizing operating assembly which may be made according to different structural patterns.

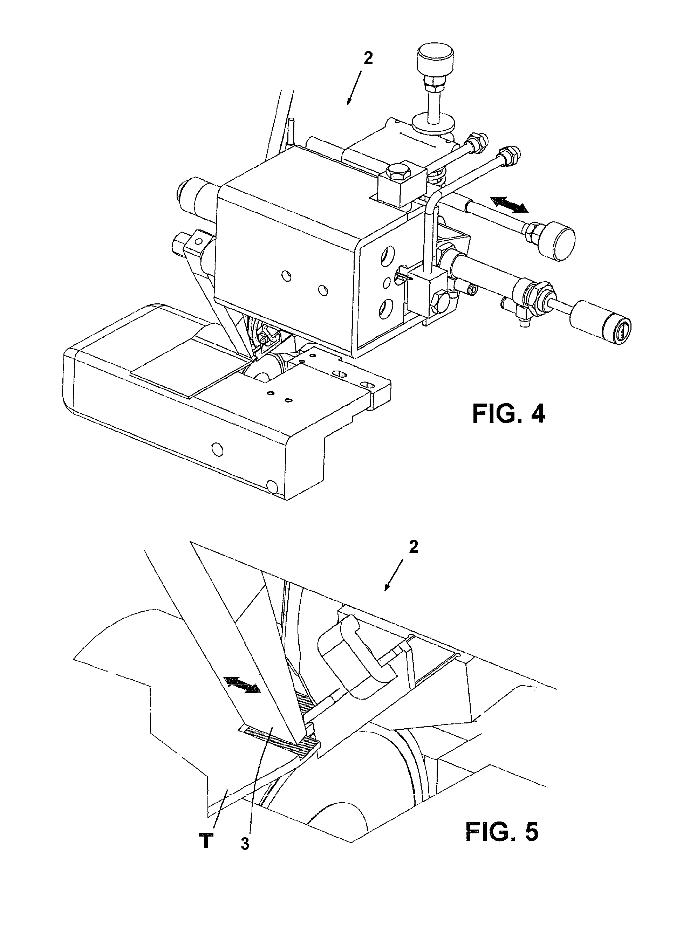

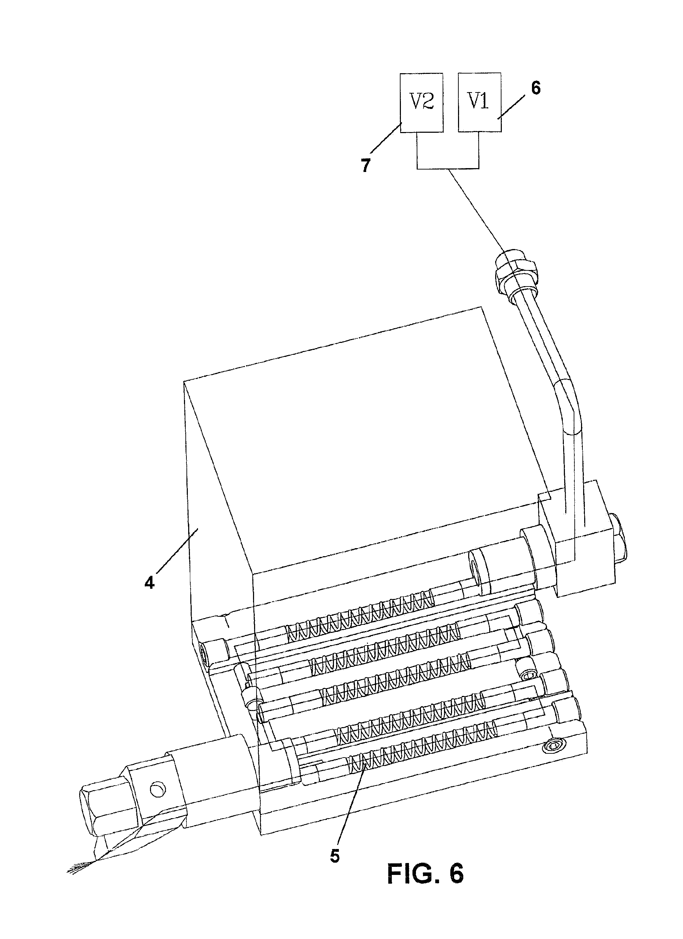

In figures 4 to 6, a distributed jet cauterization assembly is shown, indicated generally by the reference number 2, which comprises an inlet or mouth portion 3, arranged at an edge of a two-layer or three-layer laminated fabric material face generally indicated by the reference letter T.

The mouth or inlet portion 3 is connected to an overheater 4 for overheating a distributed air jet pattern, which includes a resistance set 5 thereon air to be overheated is fed through a first air delivery valve 6 and a second air delivery valve 7 which may be used either selectively or in combination, thereby allowing to change the overheated air flow to be applied on the fabric material.

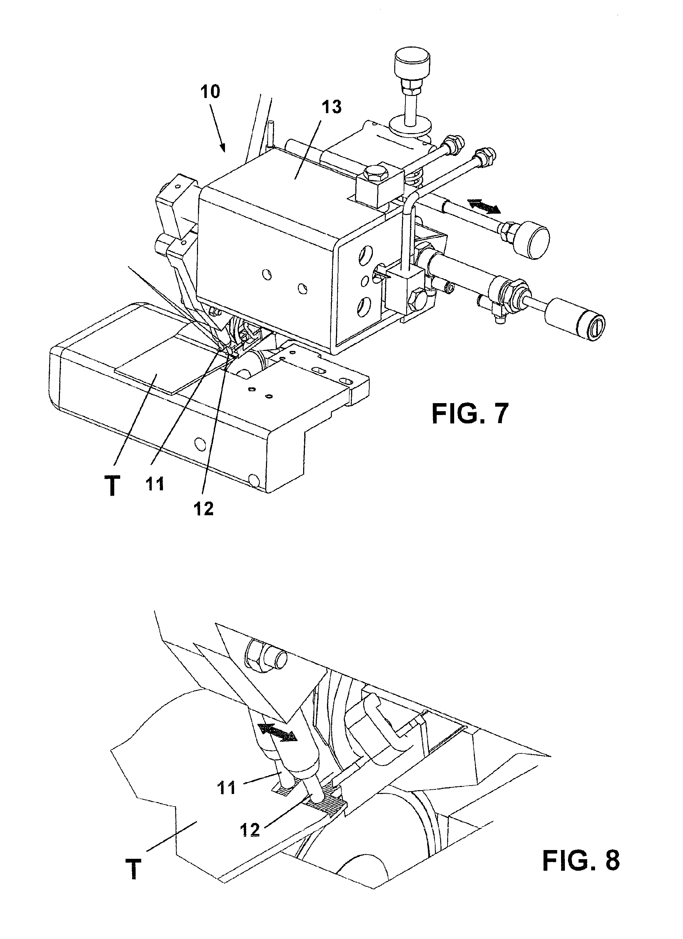

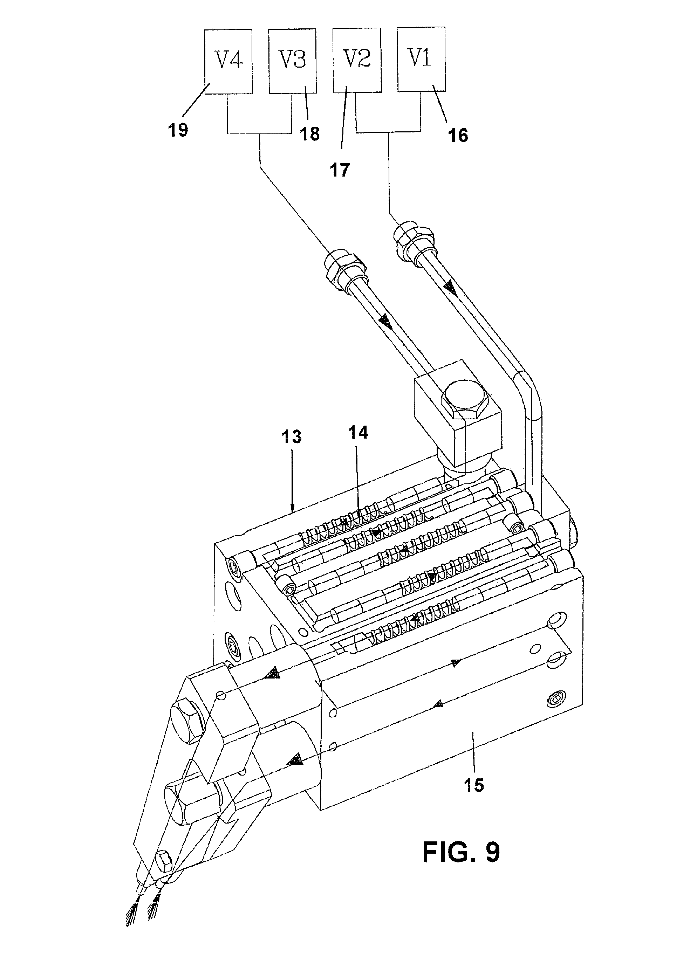

As shown in figures 7 and 9, a concentrated-jet cauterization or cauterizing assembly, generally indicated by the reference number 10, including a first jet 11 and a second jet 12, said jets being arranged with an adjoining relationship at the edge portion of the fabric material T, is provided.

Said jet are operatively coupled to a concentrated jet of the heater device, generally indicated by the reference number 13, including a first set of electric resistances 14 and a second set of electric resistances 15 which are respectively coupled to the two jets 11 and 12.

For each said resistance set a first and second valve 16 and 17, as well as 18 and 19 for adjusting or controlling the inlet air flows are provided.

In operation, it is possible to properly select the jets to be used, as well as their inlet air flow rates, with the possibility of feeding either a single jet or two jets, and in both cases with a further possibility of changing the air flow rate or amount by operating the corresponding solenoid valves.

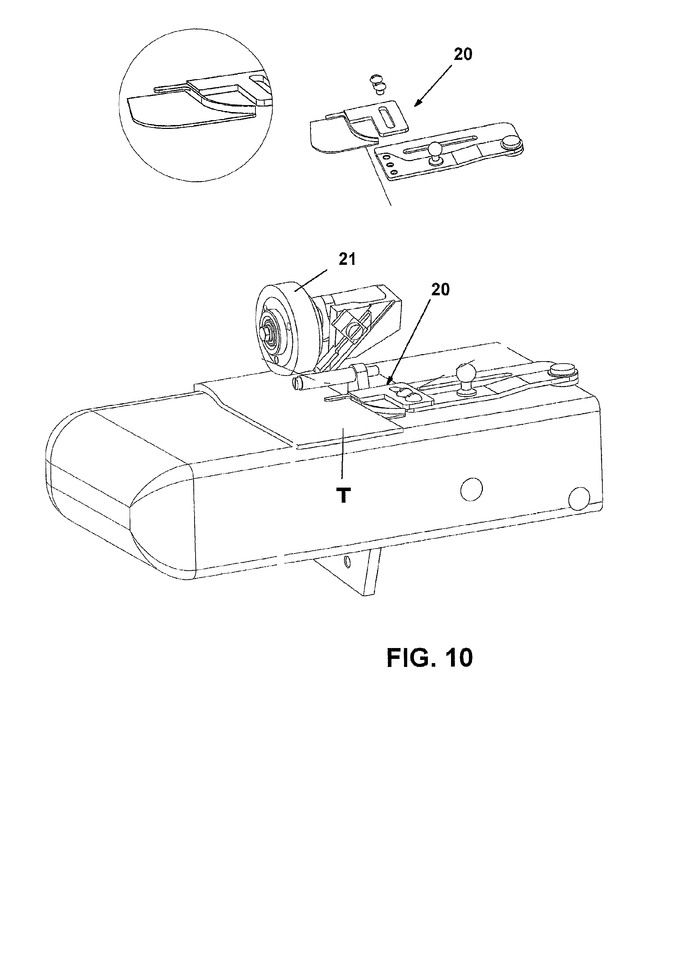

The inventive machine, as shown in figure 10, comprises a guide or driving assembly 20 for driving or guiding the fabric material T which is arranged on a fabric material feeding or driving rubber coated wheel 21 being coupled to an inclined or slanted fabric cutting assembly 22, including an interexchangeable plate 24 having a contoured edge and restrained by a restraining washer element 25.

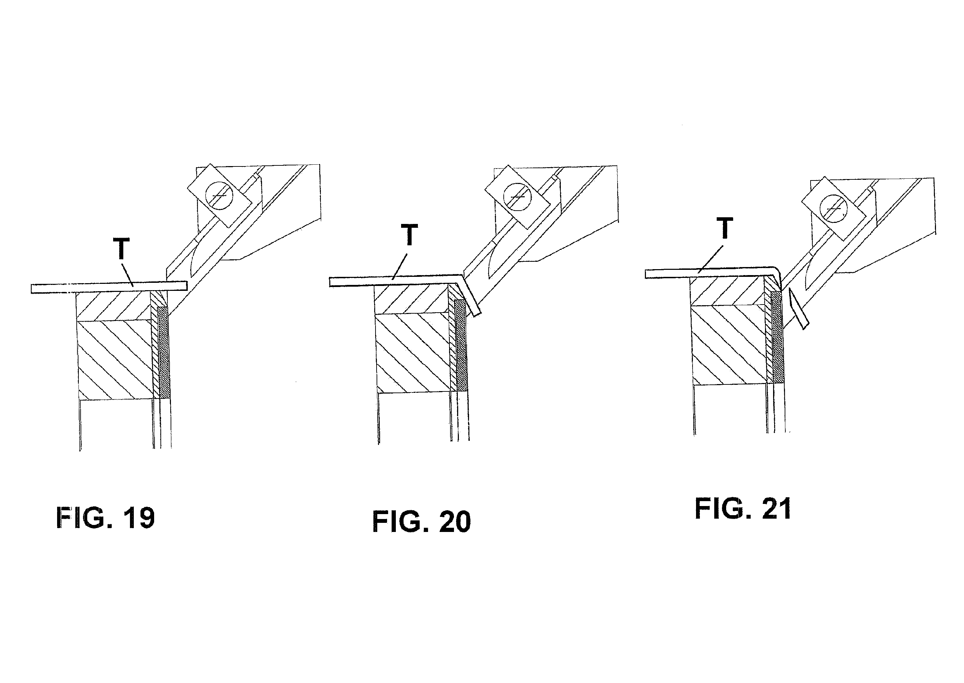

On the peripheral portion of the contoured plate 24, a cutting blade 26 is radially driven, as shown in figures 19 to 21, to perform at first a preliminarily folding of the fabric material T edge portion and then an inclined cut for connection with the contoured plate 24.

Upon having cut the fabric material T, an adhesive strip or tape feeding assembly 30, including an adhesive strip supplying bobbin 31, provides an adhesive strip or tape member supported on a silicone processed support element, which is supplied on a driving roller 32 cooperating with a guiding chute assembly 33, for causing the adhesive strip to be properly arranged with respect to the fabric material entraining or driving roller.

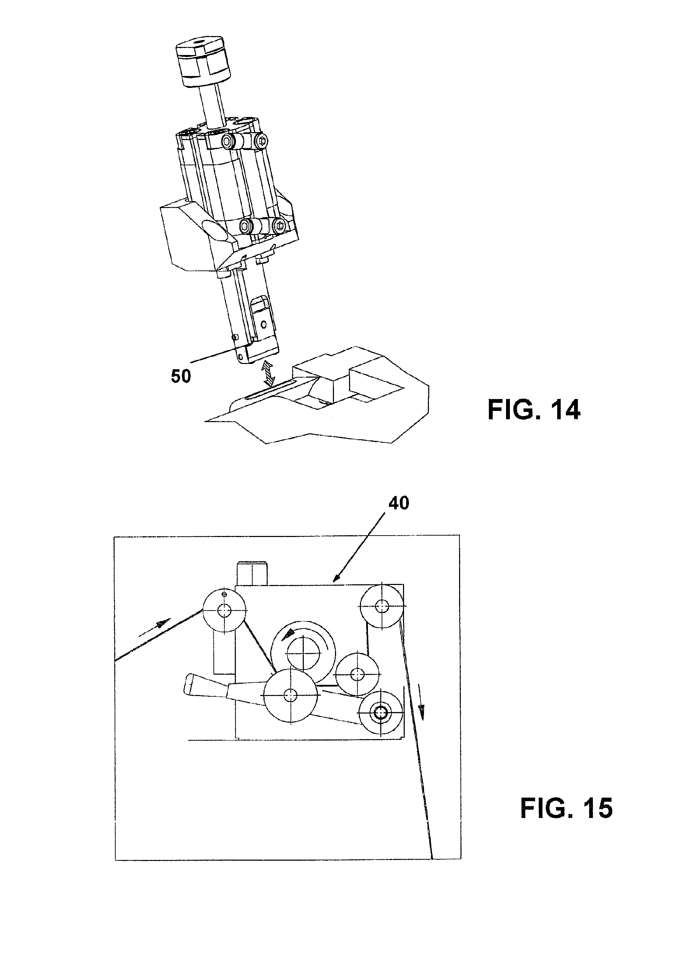

In particular, the adhesive strip is caused to pass through a programmable pulling or tensioning assembly 40, shown in figure 15, for tensioning or not the adhesive strip at will.

More specifically, said adhesive strip is tensioned or pulled by a pair of rubber coated wheel elements, respectively indicated by the reference numbers 21 and 32, which are operatively driven by independent motors, to provide either like or different operating speeds, thereby in turn providing a differential type of effect.

The above wheel assembly allows to apply to the fabric material pulling forces different from those applied to the adhesive material.

Thus, it is possible to apply the adhesive strip to the fabric regions on which the cauterization lines have been already formed, which cauterization lines may comprise a pair of adjoining lines, a single line or an enlarged portion, arranged at the fabric material free edge.

In this region a suction device is moreover arranged, for removing burnt residue materials and providing the fabric with improved adhesion properties: in other words, the fabric material will advantageously perfectly adhere to the adhesive strip, thereby providing an optimum tight connection thereof.

From the above distance it should be apparent that the invention fully achieves the intended aim and objects.

In fact, the inventive machine allows to perfectly automatically carry out the cauterization and cutting operations on the fabric material and to apply to the cauterized fabric material an adhesive strip which is cut to any desired size by the cutting assembly 50 of figure 14.

The disclosed machine allows moreover to adjust at will the operating temperature thereby providing perfectly bound fabric joined portions.

The invention, as disclosed, is susceptible to several modifications and variations, all of which will come within the scope of the invention.

Moreover, all the details can be replaced by other technically equivalent elements.

In practicing the invention, the used materials, provided that they are compatible to the intended application, as well as the contingent size and shapes, can be any, depending on requirements.

## Claims

1. A machine for making fabric panels to be fluid tightly joined starting from two-layer or three-layer laminated fabric materials, **characterized in that** said machine comprises a bearing framework supporting a cauterization assembly for cauterizing a face of a fabric material to be joined and making at least a cauterization line, a cutting assembly for providing, on an edge portion to be joined of said fabric material, a slanted cutting line and an adhesive strip applying assembly for applying an adhesive strip to at least said cauterization line and at least said inclined cutting line.

2. A machine, according to claim 1, **characterized in that** said machine comprises a distributed jet overheater assembly, including a plurality of overheating resistances coupled to a distributed jet inlet portion, on said overheating resistances being conveyed a controlled air flow which is controlled by a first and second air flow controlling valves, said controlling valves being adapted to be selectively actuated.

3. A machine, according to claim 1, **characterized in that** said machine comprises a concentrated jet overheating assembly, including a first and second adjoining jets communicating with respective overheating resistances of a concentrated jet air overheating assembly, each said concentrated jet air overheating assembly being connected to a respective pair of air supplying valves which may be selectively actuated for providing either one or two different hot air adjoining flows.

4. A machine, according to claim 1, **characterized in that** said machine further comprises a fabric material guiding assembly.

5. A machine, according to claim 1, **characterized in that** said cutting assembly comprises a driving wheel element cooperating with an adjoining interexchangeable contoured plate for varying a cutting inclination of said cutting assembly.

6. A machine, according to claim 5, **characterized in that** said cutting assembly comprises a cutting blade which is operatively engaged by radially displacing said contoured plate.

7. A machine, according to claim 1, **characterized in that** said machine comprises a driving wheel element for operatively driving the adhesive strip applied on an adhesive strip supporting tape fed by a feeding adhesive strip coil.

8. A machine, according to claim 7, **characterized in that** said machine further comprises a guide assembly for guiding and arranging said adhesive strip with respect to said driving roller.

9. A machine, according to claim 7, **characterized in that** said machine further comprises an adhesive strip cutting assembly.

10. A machine, according to claim 7, **characterized in that** said machine further comprises a programmable tensioning assembly for selectively tensioning said adhesive strip.

11. A machine, according to claim 7, **characterized in that** said adhesive strip is driven by a first driving wheel and a second driving wheel, said first and second driving wheels being driven by independent driving motors thereby providing said fabric material with tensioning forces different from those applied to said adhesive strip.

12. A machine, according to claim 7, **characterized in that** said adhesive strip is applied with a flush relationship with respect to an edge of a cauterized fabric material edge portion.

13. A machine, according to claim 7, **characterized in that** said adhesive strip is applied in a cantilever relationship projecting from a cauterized fabric material edge portion.
